# FASCICULE DE BREVET EUROPEEN

(11) **EP 0 965 518 B1**
(45) Date de publication et mention de la délivrance du brevet: **27.12.2006**
(21) Numéro de dépôt: 99110854.9
(22) Date de dépôt: 07.06.1999
(51) Int. Cl.: B62L 1/16

(54) **Frein de bicyclette du type à patins**
Fahrradfelgenbremse
Bicycle caliper brake

(30) Priorité: 17.06.1998 FR 9807963
(43) Date de publication de la demande: 22.12.1999
(73) Titulaire: Salomon S.A., 74370 Metz-Tessy (FR)
(72) Inventeur: Mercat, Jean-Pierre, 01400 Chatillon Sur Chalaronne (FR); Cauvin, Bertrand, 01090 Montmerle Sur Saone (FR)
(74) Mandataire: Lejeune, Benoit

(56) Documents cités:
- DE-A- 3 929 869
- FR-A- 2 623 768
- FR-A- 2 695 616

## Description

L'invention concerne un frein de bicyclette du type à patins. L'invention concerne également un ressort de rappel pour un tel frein.

De façon connue, un tel frein comprend deux patins montés à l'extrémité de leviers qui sont articulés à la fourche ou au cadre de la bicyclette. Les leviers sont actionnés par une poignée de frein au moyen d'un câble guidé dans une gaine. Les patins sont placés à proximité des flancs de la jante, et ils sont prévus pour pincer la jante en réponse à un effort exercé sur la poignée de frein.

Parmi les constructions de frein connues, l'invention concerne plus particulièrement un frein à double pivot.

Une construction de ce type est décrite dans les demandes de brevet français publiées sous les numéro 2 695 616, et 2 623 768.

Selon ce mode de construction, un premier levier est articulé au cadre ou à la fourche autour d'un pivot principal. Le second levier est articulé autour d'un second pivot situé à l'extrémité d'une biellette montée fixe sur le cadre ou la fourche et portée par le pivot central. Entre les deux pivots, les leviers présentent pour l'un un bossage d'appui qui coopère avec un contre-appui de l'autre levier. Ces éléments coordonnent le mouvement des deux bras et renvoient dans le premier bras une partie des efforts appliqués par le câble au second bras. Enfin, les leviers se prolongent au-delà de leur pivot respectif par une branche de manoeuvre, le câble étant relié solidairement à l'extrémité de l'une des branches, l'extrémité de l'autre branche retenant la gaine du câble.

Un tel mode de construction est avantageux car il permet d'avoir un effort d'appui plus important des patins contre la jante, à cause du déport du second pivot, et de la coopération entre le bossage d'appui et le contre-appui.

Les freins de ce type actuellement connus présentent par ailleurs un ressort de rappel des leviers dans la position écartée des patins. Ce ressort est habituellement formé par un fil à ressort précontraint plié selon une spire. Une extrémité du ressort est reliée solidairement au frein au niveau du pivot central. L'autre extrémité est libre et exerce un effort de rappel sur le premier levier dans le sens d'un éloignement. Le bossage d'appui et le contre-appui coopèrent pour renvoyer une partie de cet effort au second levier.

Une telle construction donne de bons résultats, mais elle présente un inconvénient. L'extrémité libre du ressort présente en effet un mouvement relatif par rapport au levier qu'il rappelle lorsque le frein est actionné car la branche du ressort et l'encoche d'appui du levier ne suivent pas la même trajectoire. De ce fait, au cours d'un cycle de freinage, une partie de l'énergie produite par le cycliste est dissipée à cause du frottement du ressort. De l'énergie est également dissipée par le frottement du câble dans la gaine. Lorsque le frein est actionné, le cycliste doit surmonter la force de rappel du ressort et les frottements dont ceux du ressort. Au rappel du frein, les frottements, dont ceux du ressort, doivent être encore vaincus par le ressort.

Un but de l'invention est de proposer une construction améliorée d'un frein de bicyclette à double pivot.

Un autre but de l'invention est de proposer un frein à double pivot qui présente un fonctionnement amélioré.

Le frein de bicyclette selon l'invention est prévu pour être assemblé à la fourche ou au cadre d'une bicyclette à la périphérie d'une roue qui présente une jante et un moyeu, le plan de symétrie de la jante perpendiculaire à la roue définissant un plan médian lorsque le frein est en position, et un côté menant et un côté mené de chaque côté du plan. Le frein comprend deux leviers entrecroisés articulés chacun autour de pivots parallèles portés par une biellette de support prévue pour être reliée fixement au cadre ou à la fourche, l'un des pivots dit pivot principal étant situé dans le plan médian, l'autre pivot, dit second pivot, étant déporté du côté mené selon une direction approximativement perpendiculaire au plan médian. Un premier levier est monté pivotant autour du pivot principal et présente une branche inférieure dont l'extrémité est munie de moyens prévus pour le montage d'un patin de freinage, un bras supérieur de manoeuvre dont l'extrémité présente des moyens d'arrêt prévus pour la gaine d'un câble, la branche supérieure et le bras de manoeuvre étant situés du côté menant du plan médian, et une extension s'étendant du côté mené approximativement selon la direction définie par la biellette, l'extrémité de l'extension ayant une butée d'appui supérieure située approximativement entre les deux pivots. Un second levier est articulé autour du second pivot, le second levier présente une branche inférieure dont l'extrémité est munie de moyens prévus pour le montage d'un patin de freinage, et au-delà du second pivot un bras de manoeuvre dont l'extrémité s'étend du côté menant et présente des moyens d'accrochage prévus pour un câble guidé dans ladite gaine, le second levier présentant une contrebutée inférieure située en regard de la butée supérieure du premier levier. Un ressort de rappel du premier levier présente une extrémité engagée dans une encoche d'accrochage de sa branche inférieure située du côté menant.

Le ressort de rappel est un élément filiforme flexible dont l'autre extrémité est retenue dans la biellette ou le pivot central, et au moins vers l'une de ses extrémités, le ressort s'étend au-delà du pivot principal ou de l'encoche d'accrochage, de façon à présenter une zone de flexion située au-delà de la zone délimitée par le pivot principal et l'encoche d'accrochage.

Selon un premier mode de mise en oeuvre de l'invention, le ressort est retenu sur la biellette dans une zone située du côté mené entre les deux pivots, et comprend une première portion approximativement linéaire située du côté mené, une portion de contournement du pivot principal fléchie approximativement à angle droit et puis une seconde portion approximativement linéaire dont l'extrémité est engagée dans ladite encoche du premier levier.

Selon un second mode de mise en oeuvre de l'invention, le ressort présente au-delà de l'encoche d'accrochage du premier levier une boucle de retournement.

L'invention sera mieux comprise en se référant à la description ci-dessous et aux dessins en annexe qui en font partie intégrante.

La figure 1 est une vue générale de face du frein selon un premier mode de mise en oeuvre de l'invention.

La figure 2 est une vue de l'arrière du frein de la figure 1.

La figure 3 est une vue en perspective de dessous du frein de la figure 1.

La figure 4 représente la lame ressort et la biellette de support selon un premier mode de mise en oeuvre de l'invention.

La figure 5 représente le premier levier.

La figure 6 représente le second levier.

La figure 7 montre le pivot principal.

La figure 8 est un diagramme des moments de flexion appliqués à la lame ressort.

La figure 9 illustre une variante de mise en oeuvre de l'invention.

La figure 10 montre un autre mode de mise en oeuvre de l'invention.

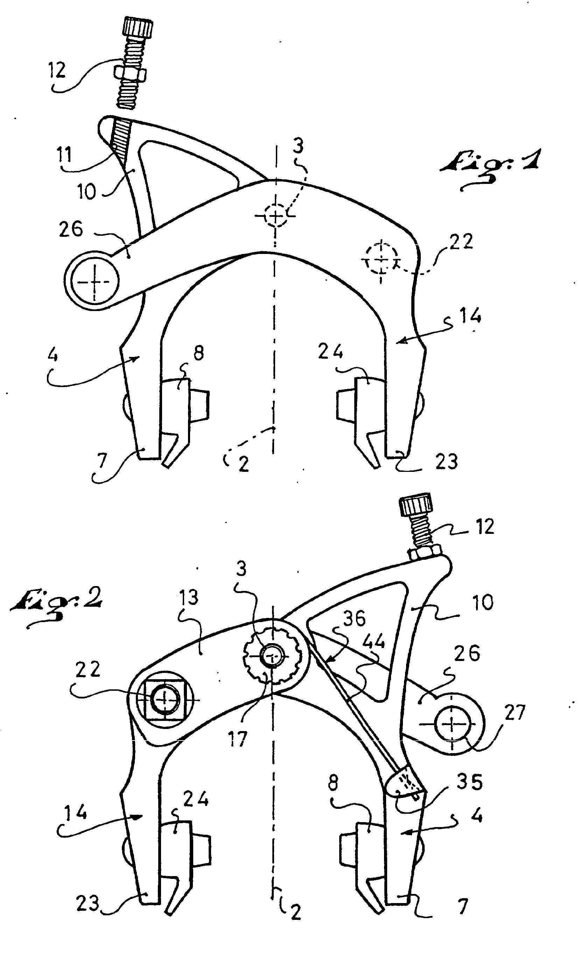

Le frein 1 représenté en figure 1 est prévu pour être assemblé au cadre ou à la fourche d'une bicyclette, à la périphérie d'une roue non représentée. De façon connue une telle roue présente une jante et un moyeu. On a repéré dans la figure 1 et dans les figures suivantes par le trait mixte 2 le plan de symétrie de la jante perpendiculaire au moyeu. Ce plan sera appelé dans la suite plan médian. Egalement, l'expression "côté menant" désignera la zone située du côté du câble de commande, c'est-à-dire le côté gauche du plan médian pour la figure 1. Le "côté mené" désignera la zone située de l'autre côté du plan médian 2, c'est-à-dire sur le côté droit du plan médian pour la figure 1.

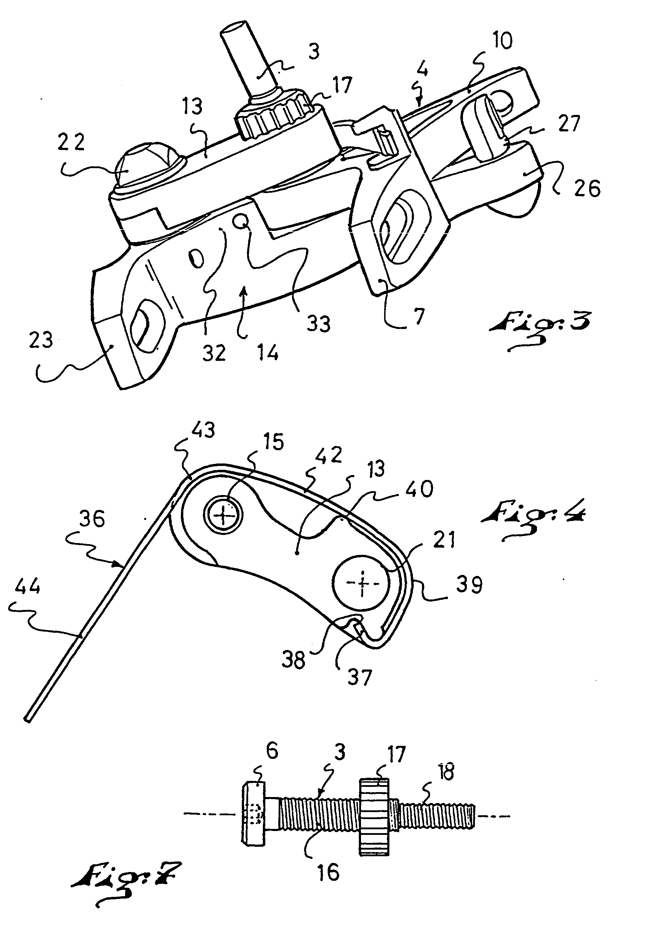

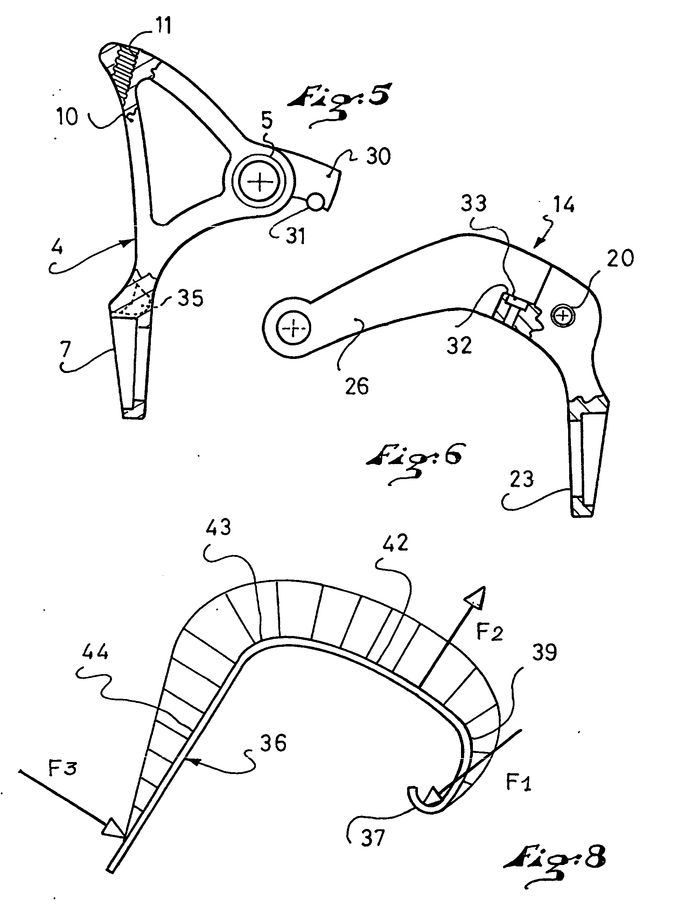

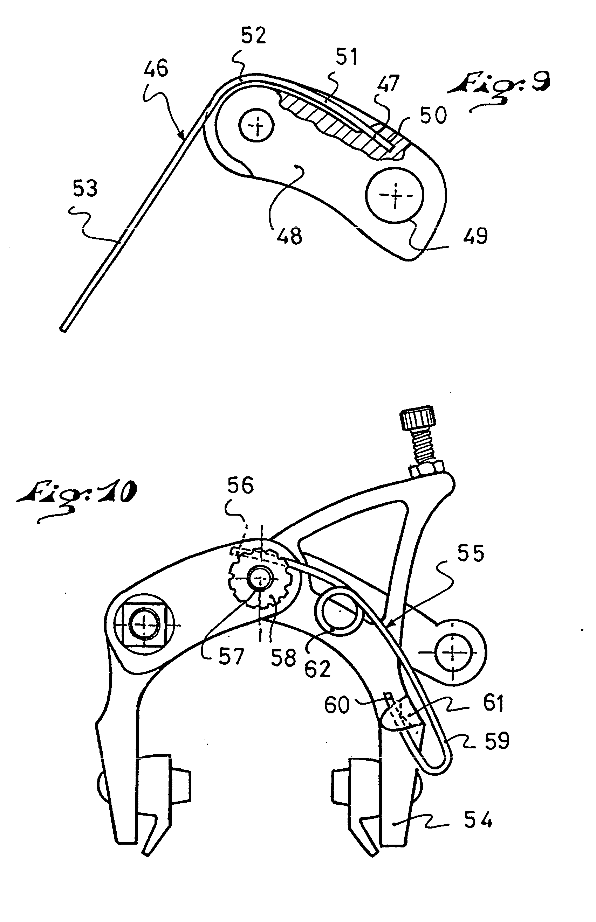

Le frein 1 représenté dans les figures 1 à 7 est prévu pour être assemblé à la fourche ou au cadre d'une bicyclette par l'intermédiaire d'un pivot principal 3 situé dans le plan médian.

Le frein comprend un premier levier 4 monté pivotant autour du pivot principal 3. A cet effet, le levier 4 présente un orifice 5 que traverse le pivot principal 3, avec de préférence un lamage pour loger la tête 6 du pivot.

Le premier levier 4 présente une branche inférieure 7 dont l'extrémité inférieure présente des moyens prévus pour l'assemblage d'un patin de freinage schématisé en 8. Il s'agit par exemple d'une lumière s'étendant le long de la branche, et qui est traversée par un boulon de retenue d'une platine porte-patin. Tout autre moyen approprié convient.

Au-delà du pivot principal 3, et du même côté du plan médian, à savoir le côté menant, le premier levier présente un bras supérieur de manoeuvre 10. Dans le mode de réalisation illustré, le bras supérieur de manoeuvre se présente comme une fourche à deux dents qui convergent vers l'extrémité supérieure du bras 10, et qui forment une sorte de triangle avec la partie supérieure de la branche 7. L'extrémité supérieure du bras de manoeuvre 10 présente des moyens d'arrêt prévus pour retenir la gaine d'un câble. Ces moyens sont représentés sous la forme d'un orifice 11 prévu pour recevoir une vis de réglage 12 dont la tête présente une cuvette de réception de la gaine. De façon connue, la vis est creuse pour le passage du câble de commande qui est guidé dans la gaine. Tout autre moyen approprié convient.

Le frein présente par ailleurs une biellette de support 13 d'un second levier 14. La biellette de support 13 est prévue pour être reliée solidairement au cadre ou à la fourche de la bicyclette. Avantageusement, la biellette de support 13 est reliée solidairement au cadre ou à la fourche par le pivot principal 3. A cet effet, la biellette 13 présente un orifice 15 taraudé au diamètre de filetage d'une première portion filetée 16 du pivot 3. Le pivot est donc vissé dans la biellette, tout en laissant un jeu de fonctionnement suffisant pour la libre rotation du premier levier 4. Un contre écrou 17 est serré à force contre la biellette et assure la liaison solidaire entre le pivot et la biellette. Au-delà de la première portion filetée 16, le pivot 3 présente une seconde portion filetée 18 prévue pour l'assemblage solidaire du pivot et de la biellette au cadre ou à la fourche de la bicyclette. Comme représentée dans les figures, cette portion peut présenter un diamètre inférieur à celui de la première portion 16. Tout moyen approprié convient pour assurer le libre pivotement du premier levier 4 par rapport au pivot 3, notamment des rondelles de glissement ou des rondelles formant un palier à billes.

La biellette est déportée du côté opposé au premier levier 4, pour l'essentiel elle est située du côté mené par rapport au plan médian. La biellette s'étend selon une direction approximativement perpendiculaire au plan médian. De préférence, cette direction est légèrement inclinée vers le bas, en direction des patins de freinage.

Le second levier 14 est monté librement pivotant à l'extrémité libre de la biellette. Par exemple, le second levier présente dans sa partie médiane un orifice taraudé 20 prévu pour une première extrémité filetée d'un pivot 22 qui traverse par ailleurs un orifice 21 situé à l'extrémité de la biellette de support 13, et qui est retenu sur la biellette par un écrou vissé sur une deuxième extrémité filetée du pivot. Le pivot 22 forme le second pivot du frein. Ce second pivot est déporté du côté mené par rapport au plan médian 2. Il est parallèle au pivot principal 3.

Le second levier présente une branche inférieure 23 avec des moyens semblables à ceux du premier levier 4 pour le montage d'un patin de freinage 24. Au-delà du second pivot 22, le second levier présente un bras de manoeuvre 26 qui traverse le plan médian 2, et présente une extrémité située du côté menant sensiblement sous l'extrémité du bras de manoeuvre 10.

L'extrémité du bras 26 est munie de moyens 27 prévus pour l'accrochage d'un câble guidé par la gaine précédemment évoquée. Ces moyens sont représentés sous la forme de deux plaquettes de pincement du câble serrées par un boulon. On pourrait aussi prévoir un moyen à excentrique pour ajuster rapidement la distance entre les deux bras de manoeuvre, et donc l'écartement des patins de frein. Tout autre moyen approprié convient.

Les deux leviers 4 et 14 présentent par ailleurs des moyens de reprise d'effort qui coordonnent leur mouvement respectif. A cet effet, le premier levier 4 présente une extension 30 qui s'étend depuis l'orifice 5 du premier pivot 3 du côté mené du plan médian 2. L'extension 30 présente dans sa partie inférieure une butée supérieure 31. Dans le mode de réalisation représenté, cette butée est formée par une goupille orientée parallèlement au pivot 3, qui est partiellement encastrée dans l'extension.

En regard de la goupille 31, et sous elle, le second levier présente un rebord 32 avec une contrebutée formée par un pion 33 encastré dans le levier. Le pion fournit une surface supérieure plane d'appui pour la goupille 31. De préférence, la butée 31 et sa contrebutée 33 sont situées à proximité de l'alignement des axes des pivots 3 et 22, de façon à limiter au minimum leur mouvement relatif au cours de la fermeture des leviers.

D'autres constructions pourraient aussi convenir, notamment, on pourrait prévoir des moyens permettant d'ajuster à ce niveau l'écartement des deux leviers 4 et 14.

Le frein 1 fonctionne de la façon suivante. Lorsque le cycliste tire sur sa poignée de frein, le câble de commande coulisse dans la gaine. Ceci provoque un rapprochement relatif des deux bras de manoeuvre 10 et 26. Les deux leviers 4 et 14 pivotent autour de leur pivot respectif, et les butée et contrebutée 31 et 33 coopèrent pour contrôler le mouvement relatif des deux bras, et équilibrer les efforts d'appui des bras.

Un ressort précontraint est par ailleurs prévu pour rappeler les deux leviers en une position écartée.

Selon l'invention, le ressort est formé par un élément filiforme précontraint. Par exemple notamment il s'agit d'une lame ou d'un fil réalisé en acier, en inox, en alliage bronze béryllium, en matériau composite ou tout autre matériau approprié. Dans le mode de réalisation illustré dans les figures 1 à 9, le ressort 36 présente une branche en appui dans une encoche d'accrochage 35 formée par une patte située à la branche inférieure du levier 4, légèrement au-dessus des moyens d'assemblage du patin. De préférence, le fond de l'encoche présente une arête d'appui contre laquelle le ressort repose. Son autre extrémité est portée par la biellette 13. Ses caractéristiques mécaniques et son appui sur la biellette de support sont déterminés pour que la zone d'appui de la branche du ressort engagée dans l'encoche 35 suive la même trajectoire que l'encoche 35, lorsque le frein est actionné. De ce fait, il ne se produit aucun mouvement relatif entre la branche du ressort et le premier levier 4, le rendement du frein est amélioré. On a trouvé que pour remplir cette condition, le ressort devait être retenu par la biellette depuis une zone située du côté mené du plan médian, et relativement écartée du pivot principal 3, de façon à présenter une zone de flexion située au-delà de la zone délimitée par le pivot principal 3 et l'encoche 35.

En se référant plus particulièrement à la figure 4, le ressort 36 se présente sous la forme d'une lame. On a obtenu de bons résultats avec une lame en acier inox de section rectangulaire, de 5 millimètres de largeur et 1,3 millimètres d'épaisseur. Ces chiffres n'ont qu'une valeur indicative. La lame est engagée dans l'encoche d'accrochage avec une précontrainte.

La lame présente une première extrémité 37 recourbée, qui forme une espèce de crochet. Cette extrémité est engagée dans une encoche de retenue 38 à la face inférieure de la biellette de support 13. L'encoche de retenue est située approximativement sous l'orifice 21 du second pivot.

Au-delà de la première extrémité 37, le ressort présente une portion 39 qui contourne la biellette jusqu'à un bossage d'appui 40 que la biellette présente à sa face supérieure. Ce bossage est situé entre les deux orifices 15 et 21 des deux pivots, en étant plus rapproché de l'orifice 21. Après le bossage, la lame présente une portion approximativement linéaire 42, puis une portion 43 de contournement du pivot principal 3, cette portion est pliée approximativement à angle droit. Enfin, la lame présente une portion 44 sensiblement linéaire, l'extrémité de cette portion étant engagée dans l'encoche d'accrochage 35 du levier 4. De préférence, dans la portion où la lame contourne la biellette, la biellette 13 présente une gorge dans laquelle la lame est encaissée. Toutefois, en dehors de l'encoche de retenue 38 et du bossage 40, la lame n'a aucun contact avec la biellette au cours du fonctionnement normal du frein.

La figure 8 représente le diagramme des moments de flexion de la lame, les forces F1, F2, F3 symbolisant respectivement les efforts appliqués sur la lame respectivement par l'encoche de retenue 38, le bossage 4, et l'encoche d'accrochage 35. Ce diagramme indique que c'est dans la zone supérieure de la lame, à savoir de part et d'autre de son appui sur le bossage 40 que l'on rencontre les moments de flexion les plus élevés.

La trajectoire de l'encoche d'accrochage est un arc de cercle centré sur l'axe du pivot 3. La trajectoire de la zone de la portion 44 en appui dans cette encoche est une trajectoire complexe résultant de la flexion de la lame dans ses différentes portions. On a déterminé qu'il était possible de faire correspondre ces trajectoires, c'est-à-dire de rendre ces trajectoires tangentes sur la plage de déplacement de l'encoche d'accrochage 35 en retenant le ressort dans la biellette de la façon représentée en figure 4, c'est-à-dire une encoche de retenue et un bossage de support, ces deux éléments étant situés du côté mené par rapport au plan médian, c'est-à-dire à l'opposé de l'encoche d'accrochage 35. En d'autres termes, en créant une zone de flexion du ressort de rappel qui se trouve au-delà du pivot principal 3, il est possible de faire correspondre les trajectoires de l'extrémité du ressort et de son encoche d'accrochage 35.

Du fait de sa précontrainte initiale et de la contrainte additionnelle en cas d'action sur le frein, le ressort rappelle le premier levier 4 en position éloignée de la jante. Par le jeu de la butée 31 et de la contrebutée 33, le rappel du premier levier 4 entraîne également le rappel du second levier 14.

D'autres modes de retenue de l'extrémité du ressort sont possibles. A cet effet, la figure 9 représente une variante où la lame ressort 46 présente une extrémité 47 retenue par encastrement dans la biellette 48, à proximité de l'orifice 49 prévu pour le second pivot.

Ainsi, la lame est retenue dans une fente d'encastrement 50 de la biellette, elle comprend ensuite une première portion 51 approximativement linéaire, une portion 52 pliée approximativement à angle droit, qui contourne le pivot 3, puis une seconde portion 53 approximativement linéaire dont l'extrémité est prévue pour être accrochée dans une encoche du premier levier. Ce mode de construction modifie la répartition des moments de flexion dans la lame en ce sens que le moment de flexion est élevé dans la zone d'encastrement de la lame. Comme dans le cas précédent, la zone de la biellette où la lame est encastrée est déterminée en fonction des caractéristiques mécaniques de la lame pour faire correspondre les trajectoires de la lame et du levier au niveau de l'encoche d'accrochage.

De plus, le fait de créer une zone de flexion du ressort située en dehors du segment délimité par le pivot principal et l'encoche d'accrochage permet d'ajuster la trajectoire du ressort à celle de son encoche d'accrochage.

En variante, la lame pourrait aussi présenter en plus de l'encastrement un appui contre un bossage du même type que le bossage 40.

La figure 10 est relative à un autre mode de mise en oeuvre de l'invention. Selon ce qui est représenté, le ressort 55 présente une première extrémité 56 qui est encastrée dans le pivot principal 57. Le premier levier 54 est pivotant autour de ce pivot principal 57. Par exemple, tel que cela est connu, l'extrémité 56 du ressort est emprisonnée dans une gorge de la biellette et elle est serrée dans sa gorge par le contre écrou 58 du pivot.

Au niveau de l'autre extrémité, le ressort forme une boucle 59 de retournement qui s'étend au-delà de l'encoche d'accrochage 61 dans laquelle l'extrémité 60 est retenue. Cette boucle crée une zone de flexion du ressort qui est située en dehors du segment formé par le pivot principal 57 et l'encoche d'accrochage 61. Comme dans les cas précédents, la forme et les caractéristiques mécaniques du ressort sont déterminées pour que l'extrémité 60 du ressort suive la trajectoire de l'encoche 61 autour du pivot principal 57.

Dans le mode de réalisation illustré, le ressort présente dans sa partie médiane un enroulement 62. Cet enroulement est en fait facultatif, et le ressort pourrait aussi bien en être dépourvu. Dans le cas d'un enroulement, le ressort est de préférence un fil. Il pourrait aussi être formé par une lame. La boucle de retournement place l'extrémité du ressort sur l'intérieur du frein. On pourrait inverser le sens de la boucle pour avoir cette extrémité sur l'extérieur du frein.

On pourrait naturellement combiner les deux modes de mise en oeuvre qui ont été décrits. Ceci reviendrait à ramener la première extrémité 56 du ressort 55 dans une encoche de retenue ou un encastrement de la biellette, situé entre les deux pivots de la biellette, avec le cas échéant un bossage d'appui.

L'invention n'est pas limitée aux modes de réalisation qui ont été décrits, d'autres variantes sont également possibles en mettant en oeuvre des équivalents techniques.

## Revendications

1. Frein de bicyclette prévu pour être assemblé à la fourche ou au cadre d'une bicyclette à la périphérie d'une roue qui présente une jante et un moyeu, le plan de symétrie de la jante perpendiculaire à la roue définissant un plan médian (2) lorsque le frein est en position, et un côté menant et un côté mené situés de chaque côté du plan, le frein comprenant :
- deux leviers entrecroisés (4, 14, 54) articulés chacun autour de pivots parallèles (3, 22, 57) portés par une biellette de support (13, 48) prévue pour être reliée fixement au cadre ou à la fourche, l'un des pivots (3, 57) dit pivot principal étant situé dans le plan médian (2), l'autre pivot (22), dit second pivot, étant déporté du côté mené selon une direction approximativement perpendiculaire au plan médian(2),
- un premier levier (4, 54) monté pivotant autour du pivot principal (3, 57) et présentant une branche inférieure (7) dont l'extrémité est munie de moyens prévus pour le montage d'un patin de freinage, un bras supérieur de manoeuvre (10) dont l'extrémité présente des moyens d'arrêt prévus pour la gaine d'un câble, la branche supérieure et le bras de manoeuvre étant situés du côté menant du plan médian, et une extension (30) s'étendant du côté mené approximativement selon la direction définie par la biellette, l'extrémité de l'extension ayant une butée d'appui supérieure (31) située approximativement entre les deux pivots,
- un second levier (14) articulé autour du second pivot (22), le second levier présentant une branche inférieure (23) dont l'extrémité est munie de moyens prévus pour le montage d'un patin de freinage, et au-delà du second pivot un bras de manoeuvre (26) dont l'extrémité s'étend du côté menant et présente des moyens d'accrochage prévus pour un câble guidé dans ladite gaine, le second levier (14) présentant une contrebutée inférieure (33) située en regard de la butée supérieure (31) du premier levier,
- un ressort de rappel (36, 46, 55) du premier levier (4, 54) dont une extrémité est engagée dans une encoche d'accrochage (35, 61) de sa branche inférieure située du côté menant,
le ressort de rappel est un élément filiforme flexible, dont l'autre extrémité (37, 47, 56) est retenue dans la biellette (13, 48) ou le pivot principal (57), et au moins vers l'une de ses extrémités, le ressort s'étend au-delà du pivot principal (3) et/ou de l'encoche d'accrochage (61), de façon à présenter une zone de flexion située au-delà de la zone délimitée par le pivot principal (3, 57) et l'encoche d'accrochage (35, 61).

2. Frein selon la revendication 1, **caractérisé par le fait que** le ressort (36, 46) est un élément filiforme flexible retenu sur la biellette (13, 48) dans une zone (40, 50) située du côté mené entre les deux pivots (3, 22), et comprenant une première portion (42, 51) approximativement linéaire située du côté mené, une portion (43, 52) de contournement du pivot principal fléchie approximativement à angle droit et puis une seconde portion (44, 53) approximativement linéaire dont l'extrémité est engagée dans ladite encoche (35) du premier levier.

3. Frein selon la revendication 2, **caractérisé par le fait qu'**une extrémité du ressort est engagée dans une encoche de retenue (38) située dans la biellette à proximité du second pivot (22), et que le ressort est retenu contre un bossage (40) de la biellette.

4. Frein selon la revendication 2, **caractérisé par le fait qu'**une extrémité du ressort est encastrée dans une fente d'encastrement (50) de la biellette (48) situé dans le voisinage du second pivot (22).

5. Frein selon la revendication 1, **caractérisé par le fait que** le ressort (55) présente une boucle de retournement (59) qui s'étend au-delà de l'encoche d'accrochage (61).

6. Frein selon la revendication 5, **caractérisé par le fait que** le ressort (55) présente un enroulement (62) dans sa partie médiane.

7. Frein selon l'une quelconque des revendications précédentes, **caractérisé par le fait que** le ressort (36, 46, 55) est une lame flexible.

8. Frein selon la revendication 7, **caractérisé par le fait que** la lame mesure 5 millimètres environ en largeur, et 1,3 millimètres environ en épaisseur.

9. Frein selon l'une quelconque des revendications précédentes, **caractérisé par le fait que** le ressort est un fil à ressort flexible.

10. Frein selon la revendication 1, **caractérisé par le fait que** le premier levier (4) présente un bras de manoeuvre (10) formé par une fourche à deux dents qui convergent vers la partie supérieure du bras, et qui forment une sorte de triangle avec la partie supérieure de la branche inférieure (7) du premier levier.

## Claims

1. Bicycle brake adapted to be assembled to the bicycle fork or frame at the periphery of a wheel comprising a rim and a hub, the symmetrical plane of the rim perpendicular to the wheel defining a median plane (2) when the brake is in position, as well as a driving side and a driven side located on each side of the plane, the brake comprising:
- two interlocked levers (4, 14, 54) each journalled around parallel pivots (3, 22, 57) borne by a supporting connecting rod (13, 48) provided to be fixedly connected to the frame or the fork, one of the pivots (3, 57), referred to as the main pivot, being located in the median plane (2), the other pivot (22), referred to as the second pivot, being offset on the driven side along an approximately perpendicular direction with respect to the median plane (2),
- a first lever (4, 54) pivotally mounted about the main pivot (3, 57) and comprising a lower arm (7), the end of which is provided with means adapted for mounting a brake pad, an upper handling arm (10), the end of which comprises stop means provided for a cable housing, the upper arm and the handling arm being located on the driving side of the median plane, and an extension (30) extending on the driven side, approximately along the direction defined by the connecting rod, the extension end having an upper support abutment (31) located approximately between the two pivots,
- a second lever (14) journalled about the second pivot (22), the second lever having a lower arm (23), the end of which is provided with means adapted for mounting a brake pad, and, beyond the second pivot, a handling arm (26), the end of which extends on the driving side and comprises means for connecting to a cable that is guided in said cable housing, the second lever (14) comprising a lower opposing abutment (33) facing the upper abutment (31) of the first lever,
- a return spring (36, 46, 55) of the first lever (4, 54), one end of which is engaged in a hooking slot (35, 61) of its lower arm located on the driving side,
the return spring is a flexible, filiform element, the other end of which (37, 47, 56) is retained in the connecting rod (13, 48) or the main pivot (57), and at least toward one of its ends, the spring extends beyond the main pivot (3) and/or the connection slot (61) so as to have a flexion zone located beyond the zone demarcated by the main pivot (3, 57) and the connection slot (35, 61).

2. Brake according to claim 1, **characterized in that** the spring (36, 46) is a flexible filiform element retained on the connecting rod (13, 48) in a zone (40, 50) located on the driven side, between the two pivots (3, 22), and comprising an approximately linear first portion (42, 51) located on the driven side, a portion (43, 52) for bypassing the main pivot, bent approximately at a right angle, and then an approximately linear second portion (44, 53), the end of which is engaged in said slot (35) of the first lever.

3. Brake according to claim 2, **characterized in that** an end of the spring is engaged in a retaining slot (38) located in the connecting rod, in the vicinity of the second pivot (22), and that the spring is retained against a boss (40) of the rod.

4. Brake according to claim 2, **characterized in that** an end of the spring is nested in a nesting slot (50) of the rod (48) located in the vicinity of the second pivot (22).

5. Brake according to claim 1, **characterized in that** the spring (55) comprises a loop (59) that extends beyond the connection slot (61).

6. Brake according to claim 5, **characterized in that** the spring (55) comprises a loop (62) in its median part.

7. Brake according to one of the previous claims, **characterized in that** the spring (36, 46, 55) is a flexible blade.

8. Brake according to claim 7, **characterized in that** the blade measures about 5 millimeters width wise and about 1.3 millimeters depth wise.

9. Brake according to any of the previous claims, **characterized in that** the spring is a wire with a flexible blade.

10. Brake according to claim 1, **characterized in that** the first lever (4) comprises a handling arm (10) made by a fork having no teeth that converge toward the upper portion of the arm and which form a sort of triangle with the upper portion of the lower arm (7) of the first lever.

## Patentansprüche

1. Zweiradbremse, welche vorgesehen ist, um an der Gabel oder an dem Rahmen eines Zweirads an dem Umfang eines Rades montiert zu werden, welches eine Felge und eine Nabe aufweist, wobei die Symmetrieebene der Felge senkrecht zu dem Rad eine Mittelebene (2) definiert, wenn die Bremse in Position ist, und eine treibende Seite und eine getriebene Seite, welche auf jeder Seite der Ebene angeordnet sind, wobei die Bremse auf weist
- zwei gekreuzte Hebel (4, 14, 54), welche jeder um parallele Drehzapfen (3, 22, 57) angelenkt sind, die durch einen Stützschwingarm (13, 48) getragen werden, der vorgesehen ist, um fest mit dem Rahmen oder mit der Gabel verbunden zu werden, wobei der eine der Drehzapfen (3, 57), bezeichnet als Hauptdrehzapfen, in der Mittelebene (2) angeordnet ist, wobei der andere Drehzapfen (22), bezeichnet als zweiter Drehzapfen, von der getriebenen Seite gemäß einer Richtung in etwa senkrecht zu der Mittelebene (2) verschoben ist;
- einen ersten Hebel (4, 54), der schwenkend um den Hauptdrehzapfen (3, 57) montiert ist und einen unteren Ast (7) aufweist, dessen Ende mit Mitteln ausgestattet ist, welche für die Montage eines Bremsklotzes vorgesehen sind, einen oberen Handhabungsarm (10), dessen Ende Stoppmittel aufweist, die für die Hülle eines Kabels vorgesehen sind, wobei der obere Ast und der Handhabungsarm auf der treibenden Seite der Mittelebene angeordnet sind, und eine Erweiterung (30), die sich von der getriebenen Seite in etwa gemäß der Richtung erstreckt, welche durch den Schwingarm definiert wird, wobei das Ende der Erweiterung einen oberen Abstützanschlag (31) aufweist, der in etwa zwischen den beiden Drehzapfen angeordnet ist;
- einen zweiten Hebel (14), welcher um den zweiten Drehzapfen (22) angelenkt ist, wobei der zweite Hebel einen unteren Ast (23) auf weist, dessen Ende mit Mitteln ausgestattet ist, die für die Montage eines Bremsklotzes vorgesehen sind, und über dem zweiten Drehzapfen einen Handhabungsarm (26), dessen Ende sich von der treibenden Seite erstreckt und Einhakmittel aufweist, die für ein Kabel vorgesehen sind, das in der Hülle geführt wird, wobei der zweite Hebel (14) einen unteren Gegenanschlag (33) aufweist, der gegenüber von dem oberen Anschlag (31) des ersten Hebels angeordnet ist;
- eine Rückstellfeder (36, 46, 55) des ersten Hebels (4, 54), von der ein Ende in einer Einhakaussparung (35, 61) seines unteren Astes in Eingriff ist, der auf der treibenden Seite angeordnet ist;
- wobei die Rückstellfeder ein drahtförmiges, flexibles Element ist, dessen anderes Ende (37, 47, 56) in dem Schwingarm (13, 48) oder in dem Hauptdrehzapfen (57) gehalten wird, und sich die Feder mindestens in Richtung zu dem einen seiner Enden über den Hauptdrehzapfen (3) und/oder die Einhakaussparung (61) hinaus erstreckt, derart, um eine Biegezone aufzuweisen, welche über der Zone angeordnet ist, welche durch den Hauptdrehzapfen (3, 57) und die Einhakaussparung (35,61) begrenzt wird.

2. Bremse nach Anspruch 1, **dadurch gekennzeichnet, dass** die Feder (36, 46) ein drahtförmiges, flexibles Element ist, welches auf dem Schwingarm (13,48) in einer Zone (40, 50) gehalten wird, die auf der getriebenen Seite zwischen den zwei Drehzapfen (3, 22) angeordnet ist, und welches einen in etwa ersten linearen Abschnitt (42, 51) umfasst, der auf der getriebenen Seite angeordnet ist, einen Abschnitt (43, 52) zur Umführung des Hauptdrehzapfens, der in etwa im rechten Winkel gebogen ist, und sodann einen zweiten in etwa linearen Abschnitt (44, 53), dessen Ende in der Aussparung (35) des ersten Hebels in Eingriff ist.

3. Bremse nach Anspruch 2, **dadurch gekennzeichnet, dass** ein Ende der Feder in einer Halteaussparung (38) in Eingriff ist, die in dem Schwingarm in der Nähe des zweiten Drehzapfens (22) angeordnet ist, und dass die Feder gegen einen Vorsprung (40) des Schwingarms gehalten wird.

4. Bremse nach Anspruch 2, **dadurch gekennzeichnet, dass** ein Ende der Feder in einen Einfügungsspalt (50) des Schwingarms (48) eingefügt ist, der in der Nähe des zweiten Drehzapfens (22) angeordnet ist.

5. Bremse nach Anspruch 1, **dadurch gekennzeichnet, dass** die Feder (55) eine Umkehrschlaufe (59) aufweist, die sich über die Einhakaussparung (61) hinaus erstreckt.

6. Bremse nach Anspruch 5, **dadurch gekennzeichnet, dass** die Feder (55) eine Aufwicklung (62) in ihrem Mittelteil aufweist.

7. Bremse nach irgendeinem der vorangegangenen Ansprüche, **dadurch gekennzeichnet, dass** die Feder (36, 46, 55) ein flexibles Blatt ist.

8. Bremse nach Anspruch 7, **dadurch gekennzeichnet, dass** das Blatt in etwa 5 Millimeter in der Breite und in etwa 1,3 Millimeter in der Dicke misst.

9. Bremse nach irgendeinem der vorangegangenen Ansprüche, **dadurch gekennzeichnet, dass** die Feder ein Draht mit flexibler Feder ist.

10. Bremse nach Anspruch 1, **dadurch gekennzeichnet, dass** der erste Hebel (4) einen Handhabungsarm (10) aufweist, welcher durch eine Gabel mit zwei Zähnen gebildet wird, die in Richtung zu dem oberen Teil des Arms zusammengehen und welche eine Art Dreieck mit dem oberen Teil des unteren Astes (7) des ersten Hebels bilden.
